# EUROPÄISCHE PATENTANMELDUNG

(11) **EP 1 886 858 A2**
(43) Veröffentlichungstag der Anmeldung: **13.02.2008**
(21) Anmeldenummer: 07014343.3
(22) Anmeldetag: 20.07.2007
(51) Int. Cl.: B60J 7/12, B60R 16/037

(54) **Winkelgeber mit Montageöffnung**

(30) Priorität: 02.08.2006 DE 102006036102
(71) Anmelder: Rausch & Pausch GmbH, 95100 Selb (DE)
(72) Erfinder: Wagner, Tobias, 21149 Hamburg (DE); Haltermann, Frank, 21258 Heidenau (DE)
(74) Vertreter: Klunker . Schmitt-Nilson . Hirsch

(57) **Zusammenfassung**

Ein Winkelgeber zum Erfassen eines relativen Schwenkwinkels zwischen einem ersten und einem zweiten Gelenkteil (3, 4) umfasst eine elektrische Schaltungskomponente mit mindestens einem Widerstandselement (6), welches relativ zu dem ersten Gelenkteil (4) ortsfest so anordenbar ist, dass es die Schwenkachse (1) zumindest teilweise umgibt, und einem Koppelelement (8), welches relativ zu dem zweiten Gelenkteil (3) ortsfest anordenbar ist und im Zusammenwirken mit dem mindestens einen Widerstandselement (6) einen Widerstandswert der elektrischen Schaltungskomponente beeinflusst, Der Winkelgeber weist eine Ausnehmung (7) auf, in welche die Schwenkachse (1) radial aufnehmbar ist, wobei der Winkelgeber so ausgebildet ist, dass das Koppelelement (8) beim Verschwenken der Gelenkteile (3, 4) relativ zueinander zwischen einer ersten Position, in der das Koppelelement (8) mit dem mindestens einen Widerstandselement (6) zusammenwirkt, und einer zweiten, innerhalb der Ausnehmung (7) liegenden Position verlagerbar ist.

## Beschreibung

Die vorliegende Erfindung bezieht sich auf einen Winkelgeber mit Montageöffnung zur Anbringung an einem Gelenk, insbesondere an einem Cabriodachgelenk.

Es ist bekannt, zurückklappbare Verdecke von Cabriolet-Fahrzeugen mit Antrieben auszustatten, welche ein vollständig automatisches Ein- und Ausklappen des Verdecks ermöglichen. Ein solches Cabriodach besteht in der Regel aus einer Mehrzahl von Elementen, welche über Gelenke miteinander verbunden sind. Zur Betätigung der einzelnen Dachelemente werden elektrische, hydraulische oder sonstige Antriebe verwendet. Dabei ist es in der Regel notwendig oder zumindest wünschenswert, die einzelnen Dachelemente bzw. die entsprechenden Gelenke unabhängig voneinander anzusteuern. Um eine effektive Steuerung des Einklapp- bzw. Ausklappvorganges des Cabriodaches zu gewährleisten, ist daher die Kenntnis über die momentane Position zumindest einiger dieser Dachelemente notwendig.

In herkömmlichen Cabiodächern werden zur Messung der Position der Dachelemente Endschalter eingesetzt.

Aus der Druckschrift US 5,225,747 ist es bekannt, an verschiedenen Gelenken des Cabriodaches Potentiometer als Winkelgeber einzusetzen, welche den relativen Winkel zwischen den Gelenkteilen an einem Gelenk erfassen. Das Potentiometer ist an der Außenseite des Gelenks angebracht und weist eine erhebliche Aufbauhöhe auf, wodurch der an dieser Position knappe Bauraum in erheblichem Umfang verbraucht wird. Zudem besteht für dieses aus Kunststoff hergestellte Gehäuse einerseits im Montageverlauf und andererseits während des Betriebs des Cabriodaches eine erhebliche Beschädigungsgefahr. Bei Beschädigungen besteht die Gefahr, dass die Cabriodachelemente über ihre vorgesehene Endlage hinausgefahren werden und dass das Cabriodach somit beschädigt wird.

Alternativ zur Anbringung des Winkelgebers an der Außenseite des Cabriodachgelenkes kann der Winkelgeber auch axial zwischen den Gelenkteilen, das heißt in einem geschützten Bereich zwischen den Dachkinematiklenkern des Gelenkes angeordnet werden. Dazu muss jedoch der Montageprozess der Kinematiklenker des Cabriodaches umgestellt werden, um die zusätzliche Anbringung des Winkelgebers zu ermöglichen.

Findet die Lackierung der Kinematiklenker des Cabriodaches erst nach deren Zusammenbau statt, so wird der bereits verbaute Winkelgeber ebenfalls von dem Lackierschritt erfasst. In diesem Fall muss der Winkelgeber daher zusätzlichen Anforderungen genügen, beispielsweise im Falle einer KTL-Lackierung (Kathodische Tauchlackierung) den dabei entstehenden hohen Temperaturen widerstehen.

Es ist daher Aufgabe der vorliegenden Erfindung, einen Winkelgeber zu schaffen, welcher an einem Gelenk auch nach dessen Zusammenbau, insbesondere in dem geschützten Bereich zwischen den Gelenkteilen des Gelenks, montierbar ist.

Diese Aufgabe wird durch einen Winkelgeber, durch ein Gelenk, durch ein Verfahren sowie durch ein Cabriodachgelenk gemäß den unabhängigen Ansprüchen gelöst. Vorteilhafte Ausgestaltungen sind in den untergeordneten Ansprüchen angegeben.

Der Erfindung liegt die Erkenntnis zugrunde, dass beim Verschwenken der Gelenkteile eines Gelenkes in der Regel nur das Erreichen bzw. das Annähern an eine vorbestimmte Endlage genau ermittelt werden muss, da im Zwischenbereich der Antrieb der Gelenkteile beispielsweise mit voller Leistung arbeitet. Daher ist das Erfassen des relativen Schwenkwinkels der Gelenkteile zueinander nur in der Nähe dieser Endlagen notwendig.

Der erfindungsgemäße Winkelgeber zum Erfassen eines relativen Schwenkwinkels zwischen einem ersten und einem zweiten Gelenkteil, welche unter Ausbildung einer Schwenkachse schwenkbar miteinander verbunden sind, umfasst eine elektrische Schaltungskomponente mit mindestens einem elektrischen Widerstandselement, welches relativ zu dem ersten Gelenkteil ortsfest so anordenbar ist, dass es die Schwenkachse zumindest teilweise umgibt, und mit einem Koppelelement, welches relativ zu dem zweiten Gelenkteil ortsfest anordenbar ist, und im Zusammenwirken mit dem mindestens einem Widerstandselement einen Widerstandswert der elektrischen Schaltungskomponente beeinflusst. Der erfindungsgemäße Winkelgeber umfasst weiterhin eine Ausnehmung, in welche die Schwenkachse radial aufnehmbar ist, wobei der Winkelgeber so ausgebildet ist, dass das Koppelelement beim Verschwenken der Gelenkteile relativ zueinander zwischen einer ersten Position, in der das Koppelelement mit dem mindestens einen Widerstandselement zusammenwirkt, und einer zweiten Position, welche innerhalb der Ausnehmung liegt, verlagerbar ist.

Die erste Position fällt in einen ersten Schwenkwinkelbereich, in welchem das Koppelelement bei Blickrichtung entlang der Schwenkachse oberhalb des Widerstandselementes angeordnet ist und mit diesem zusammenwirkt. Beim Verschwenken der Gelenkteile innerhalb dieses ersten Schwenkwinkelbereiches verändert sich der Ort, an welchem das Koppelelement mit dem Widerstandselement zusammenwirkt, wodurch die elektrische Schaltungskomponente einen winkelabhängigen elektrischen Widerstandswert aufweist. Der Widerstandswert der elektrischen Schaltungskomponente kann durch eine geeignete äußere Beschaltung abgefragt werden, wodurch ein Winkelsignal gebildet wird. Die zweite Position fällt in einen zweiten Schwenkwinkelbereich, in welchem bei Blickrichtung entlang der Schwenkachse das Koppelelement oberhalb der Ausnehmung angeordnet ist. Beim Verschwenken der Gelenkteile innerhalb dieses zweiten Schwenkwinkelbereiches wirkt das Koppelelement mit dem Widerstandselement nicht zusammen, und der Widerstandswert der elektrischen Schaltungskomponente ist unabhängig von dem relativen Winkel zwischen dem ersten und dem zweiten Gelenkteil und beispielsweise konstant.

Das Koppelelement ist beispielsweise als Schleifer ausgebildet, welcher relativ zum ersten Gelenkteil und damit relativ zum Widerstandselement beweglich ist und elektrisch, mechanisch oder in einer sonstigen Art und Weise mit dem Widerstandselement zusammenwirkt. Das Widerstandselement kann sich bis zum Rand der Ausnehmung erstrecken oder von diesem beabstandet sein, so dass im letzteren Fall ein weiterer Schwenkwinkelbereich entsteht, in welchem das Koppelelement weder mit dem Widerstandselement wechselwirkt, noch oberhalb der Ausnehmung angeordnet ist. Das Widerstandselement muss sich somit nicht über den gesamten Winkelbereich des Winkelgebers erstrecken, welcher nicht in die Ausnehmung fällt.

Die Ausnehmung, in welche die Schwenkachse aufgenommen werden kann, reicht bis zu einem Rand des Winkelgebers, und gestattet somit die radiale Positionierung der Schwenkachse an einer vorbestimmten Position innerhalb des Winkelgebers. Das Vorsehen einer Ausnehmung gestattet das nachträgliche Anbringen des erfindungsgemäßen Winkelgebers durch einfaches Aufstecken auch beispielsweise im geschützten Bereich zwischen den Gelenkteilen eines bereits montierten Gelenks. Dadurch werden wesentliche Nachteile von bekannten geschlossenen Potentiometern überwunden, der erprobte Montageprozess von Gelenken muss nicht verändert werden und der Winkelgeber muss Umgebungsbedingungen widerstehen können, welche nur während des Montagesprozesses des Gelenkes auftreten. Der erfindungsgemäße Winkelgeber kann auch bei bereits vorhandenen Gelenken nachgerüstet werden.

Das Widerstandselement kann an dem ersten Gelenkteil direkt oder mit Hilfe eines oder mehrerer weiterer Konstruktionsteile befestigt werden. Ebenso kann das Koppelelement an dem zweiten Gelenkteil unmittelbar oder mit Hilfe eines oder mehrerer weiterer Konstruktionselemente befestigt werden. Dazu können das erste und das zweite Gelenkteil Vertiefungen oder sonstige Einrichtungen aufweisen, welche die Befestigung des Widerstandselementes bzw. des Koppelelements unterstützen.

Die elektrische Schaltungskomponente des Winkelgebers kann auf dem ersten und zweiten Gelenkteil derart angeordnet werden, dass die erste Position eine Endlage der Schwenkbewegung der Gelenkteile relativ zueinander darstellt. Dadurch kann das Erreichen der Endlage anhand des Widerstandswertes der elektrischen Schaltungskomponente erkannt werden.

In einer vorteilhaften Ausgestaltung des erfindungsgemäßen Winkelgebers ist das Koppelelement eingerichtet, beim Schwenken der Gelenkteile relativ zueinander, die Ausnehmung vollständig überstreichen zu können, um in einer dritten Position erneut mit dem mindestens einen Widerstandselement zusammenzuwirken.

Die erste und die dritte Position definieren dabei beispielsweise die Endlagen einer Schwenkbewegung der Gelenkteile, an denen der Winkelgeber anbringbar ist. Beide Endlagen liegen somit in einem Schwenkwinkelbereich, in welchem eine Wechselwirkung des Koppelelementes mit dem Widerstandselement stattfindet und somit das Erreichen dieser Endlagen anhand des Widerstandswertes der elektrischen Schaltungskomponente festgestellt werden kann. Zwischen den beiden Endlagen überstreicht das Koppelelement die Ausnehmung vollständig, das heißt, das Koppelelement tritt im Laufe der Schwenkbewegung beispielsweise azimutal in die Ausnehmung ein und aus dieser beispielsweise auf der gegenüberliegenden Seite der Ausnehmung wieder aus, wodurch in einem Zwischenbereich der Schwenkbewegung das Koppelelement mit dem Widerstandselement nicht zusammenwirkt und demzufolge an dem Winkelgeber kein Schwenkwinkel-abhängiges Winkelsignal abgegriffen werden kann. Dies ist beispielsweise dann nicht notwendig, wenn der Schwenkwinkel in diesem Zwischenbereich nicht erfasst werden muss, weil die Schwenkbewegung z. B. mit maximaler Geschwindigkeit ablaufen bzw. der Antrieb der Gelenkteile auf maximale Leistung gehen soll. Auf beiden Seiten der Ausnehmung kann die Wechselwirkung des Koppelelementes mit demselben oder mit verschiedenen Widerstandselementen stattfinden.

Die Auslegung des Winkelgebers derart, dass ein vollständiges Überstreichen der Ausnehmung vorgesehen ist, hat den Vorteil, dass die beiden Endlagen der Schwenkbewegung voneinander weit entfernt liegen können und deren Abstand nicht durch den Messschatten, welche die Ausnehmung definiert, begrenzt ist. Insbesondere können damit die Endlagen einer Schwenkbewegung um 360 Winkelgrad und mehr erfasst werden. Weiterhin ergeben sich durch die Möglichkeit mit dem Koppelelement die Ausnehmung überstreichen zu können zusätzliche Freiheitsgrade bei der Anbringung des Widerstandselements und des Koppelelements an den Gelenkteilen.

In einer weiteren vorteilhaften Ausgestaltung umfasst der Winkelgeber eine Einlaufschräge für das Koppelelement am Rand der Ausnehmung. Dadurch wird der räumliche Übertritt des Koppelelementes zwischen dem Bereich der Ausnehmung und dem Bereich, in welchem das Koppelelement mit dem mindestens einen Widerstandselement zusammenwirkt, unterstützt. Vorzugsweise umfasst der Winkelgeber zwei Einlaufschrägen zu beiden Seiten der Ausnehmung, um auch ein vollständiges Überstreichen der Ausnehmung und somit das Verfahren des Koppelelementes von der ersten in die dritte Position zu unterstützen.

In einer weiteren vorteilhaften Ausgestaltung des Winkelgebers ist das Widerstandselement zumindest teilweise kreisbogenförmig ausgebildet, und die Ausnehmung des Winkelgebers ist derart ausgebildet, dass die Schwenkachse im Kreisbogenmittelpunkt des Widerstandselementes radial angeordnet werden kann. Bei Anbringung am Gelenkteil ist der Abstand des Koppelelements von der Schwenkachse vorzugsweise gleich dem Radius des kreisbogenförmigen Widerstandselements, wodurch das Koppelelement durch die Schwenkbewegung der Gelenkteile oberhalb des Widerstandselements verfahren werden kann.

In einer weiteren vorteilhaften Ausgestaltung des Winkelgebers ist dessen elektrische Schaltungskomponente Teil eines Folienpotentiometer. Das Koppelelement ist dabei beispielsweise als mechanischer Schleifer ausgebildet. Unmittelbar oberhalb der Widerstandsbahn ist eine flexible Leitungsbahn angeordnet, welche der mechanische Schleifer in seinem Wechselwirkungsbereich auf die Widerstandsbahn niederdrückt, und somit einen elektrischen Kontakt zwischen Leitungsbahn und Widerstandsbahn herstellt. Eine solche Ausbildung der elektrischen Schaltungskomponente des Winkelgebers als Teil eines Folienpotentiometers gewährleistet eine geringe Aufbauhöhe des Winkelgebers. Dadurch verbraucht der Winkelgeber keinen oder nur wenig Bauraum und er kann vorzugsweise in dem geschützten Bereich zwischen den Gelenkteilen angeordnet werden. Um einen verschleißarmen Betrieb des Winkelgebers zu gewährleisten, kann der mechanische Schleifer ein Federelement und/oder eine rollende Kugel, welche auf der Leitungsbahn des Folienpotentiometers abrollt, umfassen.

Ein zweiter Aspekt der Erfindung betrifft ein Gelenk, welches ein erstes und ein zweites Gelenkteil unter Ausbildung einer Schwenkachse schwenkbar miteinander verbindet. Das Gelenk umfasst einen erfindungsgemäßen Winkelgeber, dessen Widerstandselement relativ zu dem ersten Gelenkteil und dessen Koppelelement relativ zum zweiten Gelenkteil ortsfest angeordnet ist. Die Schwenkachse des Gelenks ist innerhalb der radial offenen Ausnehmung des Winkelgebers angeordnet. Damit kann der Schwenkwinkel des Gelenks als Widerstandswert der elektrischen Schaltungskomponente erfasst werden, wenn das Koppelelement mit dem Widerstandselement des Winkelgebers zusammenwirkt.

In einer vorteilhaften Ausgestaltung des Gelenks ist der Winkelgeber bezogen auf die Schwenkachse räumlich zwischen dem ersten und dem zweiten Gelenkteil angeordnet. Damit befindet sich der Winkelgeber in einem geschützten Bereich, was die Beschädigungsgefahr für den Winkelgeber reduziert.

Ein weiterer Aspekt der Erfindung betrifft eine Kinematikvorrichtung für ein Cabriodach, mit einem Cabriodachgelenk, welches als erfindungsgemäßes Gelenk aufgebaut ist, mit einem Antrieb zum Betätigen des Cabriodachgelenks und mit einer Kontrolleinrichtung zum Erfassen eines Winkelsignals an dem Winkelgeber und zum Ansteuern des Antriebs in Abhängigkeit von dem Winkelsignal. Der Antrieb kann elektrisch, hydraulisch oder in sonstiger Art und Weise aufgebaut sein. Die Kontrolleinrichtung steuert das Ein- und Ausfahren des Cabriodaches, erkennt das Erreichen von Endlagen, steuert und regelt den Bewegungsablauf der verschiedenen Dachelemente unabhängig voneinander und erkennt Fehlersituationen. Die Kontrolleinrichtung ist dabei ausgelegt, das Auftreten einer Messunterbrechung des Winkelsignals zuzulassen.

Ein weiterer Aspekt der Erfindung betrifft ein Verfahren zum Schwenken eines ersten und eines zweiten Gelenkteils relativ zueinander unter Verwendung eines erfindungsgemäßen Winkelgebers, dessen Widerstandselement relativ zu dem ersten Gelenkteil und dessen Koppelelement relativ zu dem zweiten Gelenkteil ortsfest angeordnet sind, wobei die Schwenkachse innerhalb der Ausnehmung des Winkelgebers angeordnet ist. Das Verfahren umfasst den Schritt des Verlagerns des Koppelelementes zwischen der ersten und der zweiten Position durch Schwenken der Gelenkteile relativ zueinander, wobei das Koppelelement an der ersten Position mit dem mindestens einen Widerstandselement des Winkelgebers zusammenwirkt und das Koppelelement an der zweiten Position oberhalb der Ausnehmung liegt.

Eine vorteilhafte Ausgestaltung des erfindungsgemäßen Verfahrens umfasst den weiteren Schritt des Verlagerns eines Koppelelements zwischen der zweiten und der dritten Position durch Schwenken der Gelenkteile relativ zueinander, wobei das Koppelelement an der dritten Position erneut mit dem mindestens einen Widerstandselement zusammenwirkt. Beim Verlagern des Koppelelements von der ersten in die dritte Position überstreicht das Koppelelement die Ausnehmung des Winkelgebers vollständig.

Eine weitere vorteilhafte Ausgestaltung des erfindungsgemäßen Verfahrens umfasst den weiteren Schritt des Beenden des Schwenkens, wenn ein Winkelsignal des Winkelgebers das Erreichen einer Endlage anzeigt.

Gemäß einer weiteren vorteilhaften Ausgestaltung des erfindungsgemäßen Verfahrens wird vor dem Beenden des Schwenkens der folgende Schritt durchgeführt: Verlangsamen des Schwenkens, wenn das Winkelsignal das Erreichen einer vorbestimmten Position vor der Endlage anzeigt. Das Erreichen dieser vorbestimmten Position zeigt an, dass das Erreichen der Endlage bevorsteht. Das Verlangsamen des Schwenkens hat den Vorteil, dass die Endlage der Schwenkbewegung nicht mit voller Schwenkgeschwindigkeit erreicht wird, sondern mit reduzierter Schwenkgeschwindigkeit, was den Verschleiß der Bauteile herabsetzt und andererseits den Bedienungskomfort erhöht, da die Gelenkteile und daran möglicherweise angebrachte Bauteile in ihre vorgesehene Endlage sanft einfahren.

Ein weiterer Aspekt der Erfindung betrifft ein Cabriodachgelenk, welches ein erstes und ein zweites Gelenkteil unter Ausbildung einer Schwenkachse schwenkbar miteinander verbindet. Das Cabriodachgelenk umfasst einen Winkelgeber zum Erfassen eines relativen Schwenkwinkels zwischen dem ersten und dem zweiten Gelenkteil. Der Winkelgeber umfasst eine elektrische Schaltungskomponente mit mindestens einem Widerstandselement, welches relativ zu dem ersten Gelenkteil ortsfest so angeordnet ist, dass es die Schwenkachse zumindest teilweise umgibt und mit einem Koppelelement, welches relativ zu dem zweiten Gelenkteil ortsfest angeordnet ist und im Zusammenwirken mit dem mindestens einen Widerstandselement einen Widerstandswert der elektrischen Schaltungskomponente beeinflusst. Der Winkelgeber umfasst eine radial offene Ausnehmung, in welcher die Schwenkachse angeordnet ist. Der Winkelgeber kann wegen der radial offenen Ausnehmung nachträglich an einem bereits montierten Cabriodachgelenk montiert werden.

In einer vorteilhaften Ausgestaltung des erfindungsgemäßen Cabriodachgelenks ist dessen elektrische Schaltungskomponente Teil eines Folienpotentiometers.

Im Folgenden wird die Erfindung anhand eines Ausführungsbeispieles in Verbindung mit den Zeichnungsfiguren näher erläutert. Es zeigen:
- Figur 1 :: eine Seitenansicht des erfindungsgemäßen Gelenks;
- Figuren 2-4:: den Bewegungsablauf des erfindungsgemäßen Verfahrens in Draufsicht auf das Gelenk entlang der Schwenkachse;
- Figur 5:: eine schematische Darstellung der Messunterbrechung;
- Figur 6:: den Übertritt des Koppelelementes vom Messbereich in den Messschatten;
- Figur 7:: die Einlaufschräge des erfindungsgemäßen Winkelgebers; und
- Figur 8:: das Koppelelement in Wechselwirkung mit dem Folienpotentiometer.

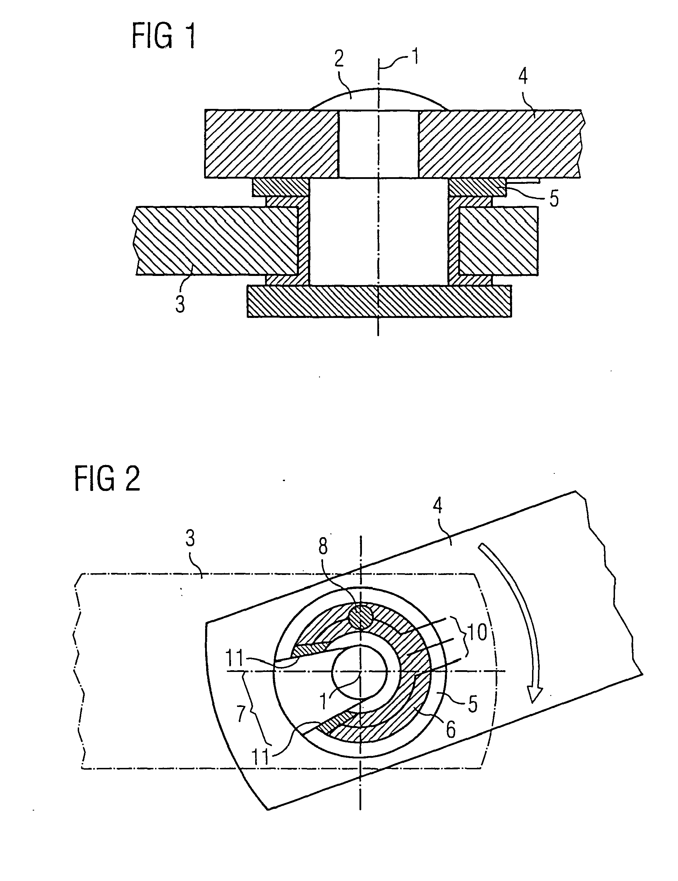

Fig. 1 zeigt einen Schnitt durch ein Ausführungsbeispiel des erfindungsgemäßen Gelenks in Seitenansicht. Die Drehachse 1 liegt in der Zeichenebene. Auf der Drehachse befindet sich ein Nietbolzen 2, welcher die Gelenkteile 3, 4 schwenkbar miteinander verbindet. Die Gelenkteile sind beispielsweise Kinematiklenker. Das Gelenk umfasst weiterhin einen Winkelgeber mit einem Potentiometer 5, welches an den oberen Gelenkteil 4 ortsfest angeordnet ist. Das untere Gelenkteil 3 ist relativ zu dem Potentiometer 5 und dem oberen Gelenkteil 4 um die Schwenkachse 1 schwenkbar.

Fig. 2 zeigt eine Draufsicht auf das erfindungsgemäße Gelenk entlang der Schwenkachse 1. Das Potentiometer 5 des Winkelgebers umfasst eine Widerstandsbahn 6, welche sich kreisbogenförmig um eine Ausnehmung 7 des Winkelgebers erstreckt. Ein Koppelelement in Form eines mechanischen Schleifers 8 ist an dem unteren Gelenkteil 3 ortsfest angebracht. In der in Fig. 2 dargestellten ersten Schwenkwinkelposition wirkt der Schleifer 8 mit der Widerstandsbahn 6 zusammen und über die elektrischen Zuleitungen 10 kann ein Schwenkwinkel-abhängiger Widerstandswert gemessen und somit ein Winkelsignal erfasst werden.

Fig. 8 zeigt einen radialen Schnitt durch das Potentiometer 5. Das Potentiometer umfasst eine Widerstandsbahn 6 und eine Leiterbahn 9. Die Leiterbahn 9 ist auf einer flexiblen Oberseite des Potentiometers 5 angeordnet und ist von der Widerstandsbahn 6 beabstandet, wenn der Schleifer 8 mit dem Potentiometer 5 nicht zusammenwirkt. In Fig. 8 ist dagegen das Zusammenwirken des Schleifers 8 mit dem Folienpotentiometer 5 dargestellt. Der Schleifer 8 drückt mechanisch auf die flexible Oberseite des Folienpotentiometers 5 und stellt somit innerhalb des Wechselwirkungsbereichs, wie dargestellt, einen elektrischen Kontakt zwischen der Leiterbahn 9 und der Widerstandsbahn 6 her. Über die elektrischen Zuleitungen 10 kann daher ein elektrischer Widerstand des Potentiometers 5 abgegriffen werden, welcher vom Ort des Zusammenwirkens zwischen Schleifer 8 und Folienpotentiometer 5 abhängt und somit vom Schwenkwinkel der Gelenkteile 3, 4 abhängig ist.

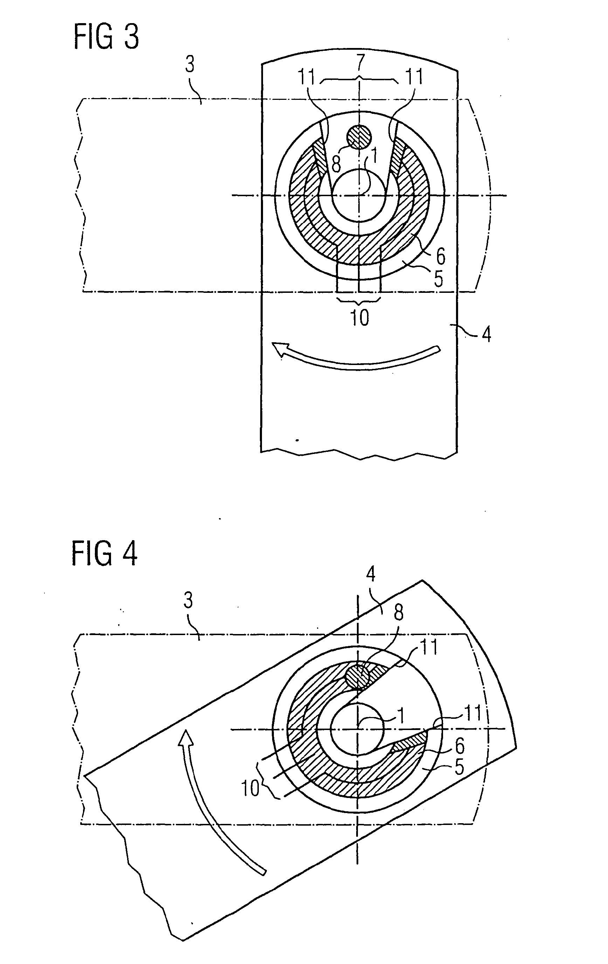

In Fig. 3 ist ein von Fig. 2 verschiedener Schwenkwinkel des Gelenkes dargestellt. Hierbei befindet sich der Schleifer 8 in einer zweiten Schwenkwinkelposition oberhalb der Ausnehmung 7. Der Schleifer 8 wirkt in dieser Position mit dem Potentiometer 5 nicht zusammen. Daher ist der Widerstandswert des Potentiometers 5 in diesem Schwenkwinkelbereich von dem Schwenkwinkel der beiden Gelenkteile 3, 4 unabhängig. Es wird mit anderen Worten, kein Winkelsignal erzeugt.

In Fig. 4 ist das Gelenk in einer dritten Schwenkwinkelposition dargestellt, in welcher der Schleifer 8 mit dem Potentiometer 5 zusammenwirkt, und ein winkelabhängiges Signal am Potentiometer 5 abgegriffen werden kann.

Die Figuren 2 bis 4 zeigen den Verfahrensablauf beim Verschwenken der beiden Gelenkteile 3, 4 relativ zueinander. Zu Beginn des Verfahrens befinden sich die Gelenkteile 3, 4 in einer ersten Schwenkwinkelposition, in welcher der Schleifer 8 mit der Widerstandsbahn 6 des Folienpotentiometers 5 zusammenwirkt und ein entsprechendes Winkelsignal am Potentiometer 5 abgegriffen werden kann. Bei einem weiteren Verschwenken der Gelenkteile 3, 4 tritt der Schleifer 8 in die Ausnehmung 7 ein, und der Schleifers 8 wirkt mit der Widerstandsbahn 6 des Potentiometers 5 nicht zusammen, weswegen kein Schwenkwinkel-abhängiges Signal am Potentiometer 5 abgegriffen werden kann. Beim weiteren Verschwenken der Gelenkteile 3, 4 überstreicht der Schleifer 8 die Ausnehmung 7 vollständig und erreicht den gegenüberliegenden Rand der Ausnehmung 7. Beim weiteren Verschwenken der Gelenkteile 3, 4 wirkt der Schleifer 8 wieder mit dem Widerstandselement 6 des Potentiometers 5 zusammen und es kann wieder ein Winkelsignal am Potentiometer 5 abgegriffen werden. Dieses Verfahren gestattet, dass die Endlagen der Schwenkbewegung einen großen Winkelabstand, beispielsweise 360° oder auch darüber, aufweisen. Der maximale Winkel einer Schwenkbewegung ist daher nicht durch den Winkelbereich begrenzt, über welchen sich das kreisbogenförmige Widerstandselement 6 des Potentiometers 5 erstreckt.

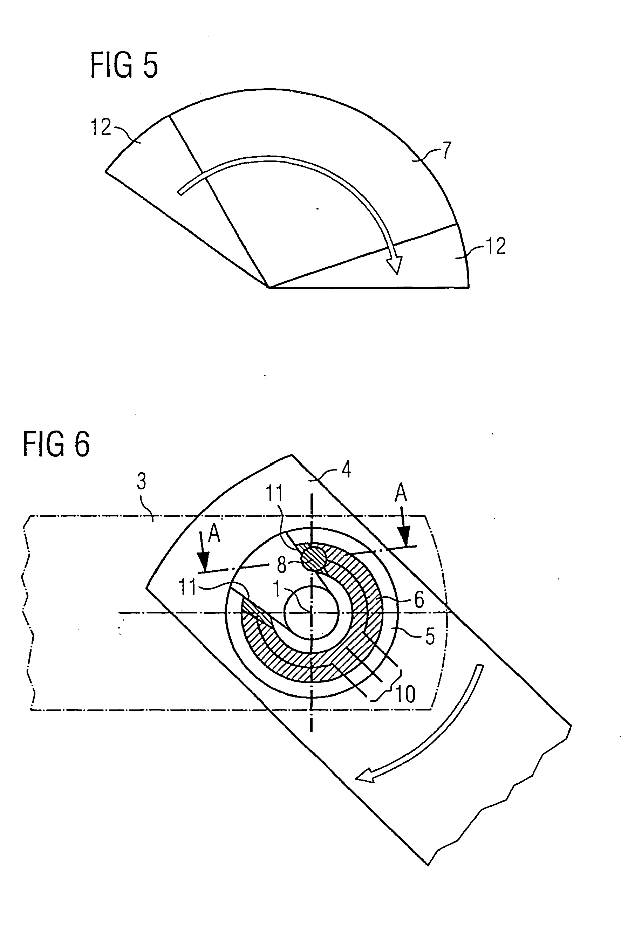

In Fig. 5 ist der Messschatten 7 schematisch dargestellt, welcher durch die Ausnehmung 7 entsteht. In den Randbereichen 12 des Messschattens 7 wirkt der Schleifer 8 mit dem Potentiometer 5 zusammen und an dem Winkelgeber kann ein Schwenkwinkel-abhängiges Signal abgegriffen werden. Im Messschatten 7 befindet sich das Koppelelement oberhalb der Ausnehmung 7. Beim Verschwenken der Gelenkteile 3, 4 relativ zueinander findet im Bereich des Messschattens 7 eine Messunterbrechung statt, in welcher kein Schwenkwinkel-abhängiges Signal abgegriffen werden kann.

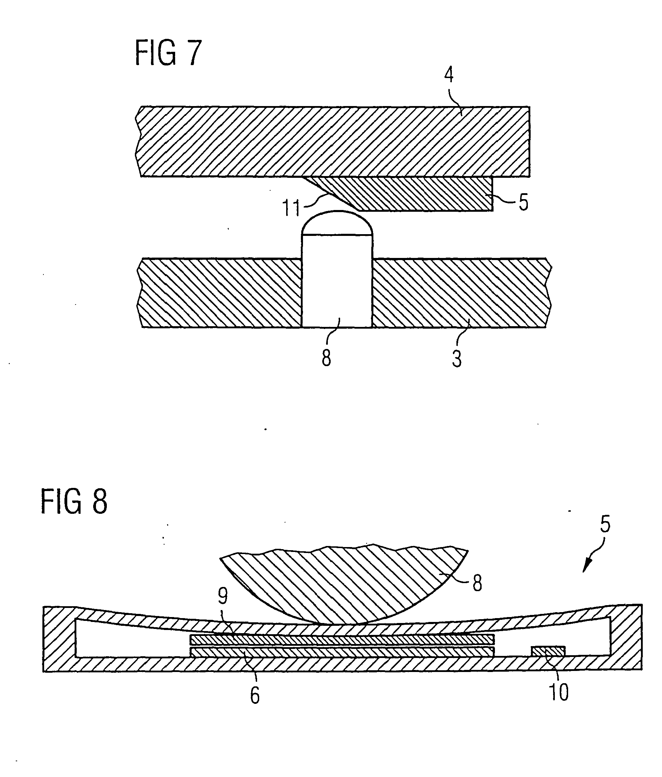

In den Fig. 2, 3, 4 und 6 sind Einlaufschrägen 11 für den Schleifer 8 zu beiden Seiten der Ausnehmung 7 dargestellt. In Fig. 6 ist der Schleifer 8 unmittelbar oberhalb einer Einlaufschräge 11, das heißt beim Eintritt in bzw. beim Austritt aus der Ausnehmung 7 dargestellt. Fig. 7 zeigt eine entsprechende Seitenansicht entlang der in Fig. 6 eingezeichneten Schnittlinie A-A. Der Schleifer 8 ist auf dem unteren Gelenkteil 3 und das Potentiometer 5 auf dem oberen Gelenkteil 4 angeordnet. Am Rand der Ausnehmung 7 ist der Winkelgeber bzw. das Potentiometer 5 abgeschrägt, so dass eine Einlaufschräge 11 entsteht, welche das Ein- und Austreten des Schleifers 8 aus der bzw. in die Ausnehmung 7 unterstützt und dadurch verschleißarm gestaltet.

## Patentansprüche

1. Winkelgeber zum Erfassen eines relativen Schwenkwinkels zwischen einem ersten (4) und einem zweiten (3), unter Ausbildung einer Schwenkachse (1) schwenkbar miteinander verbunden Gelenkteil, umfassend eine elektrische Schaltungskomponente mit mindestens einem Widerstandselement (6), welches relativ zu dem ersten Gelenkteil (4) ortsfest so anordenbar ist, dass es die Schwenkachse (1) zumindest teilweise umgibt, und einem Koppelelement (8), welches relativ zu dem zweiten Gelenkteil (3) ortsfest anordenbar ist und im Zusammenwirken mit dem mindestens einen Widerstandselement (6) einen Widerstandswert der elektrischen Schaltungskomponente beeinflusst,
**gekennzeichnet durch**
eine Ausnehmung (7), in welche die Schwenkachse (1) radial aufnehmbar ist, wobei der Winkelgeber so ausgebildet ist, dass das Koppelelement (8) beim Verschwenken der Gelenkteile (3, 4) relativ zueinander zwischen einer ersten Position, in der das Koppelelement (8) mit dem mindestens einen Widerstandselement (6) zusammenwirkt, und einer zweiten, innerhalb der Ausnehmung (7) liegenden Position verlagerbar ist.

2. Winkelgeber nach Anspruch 1,
**dadurch gekennzeichnet, dass** das Koppelelement (8) eingerichtet ist, bei einem Schwenken der Gelenkteile (3, 4) relativ zueinander, die Ausnehmung (7) vollständig überstreichen zu können, um in einer dritten Position erneut mit dem mindestens einen Widerstandselement (6) zusammenzuwirken.

3. Winkelgeber nach Anspruch 1 oder Anspruch 2,
**gekennzeichnet durch** eine Einlaufschräge (11) für das Koppelelement (8) an mindestens einem Rand der Ausnehmung (7).

4. Winkelgeber nach einem der vorhergehenden Ansprüche,
**dadurch gekennzeichnet, dass** das Widerstandselement (6) kreisbogenförmig ausgebildet ist und die Schwenkachse (1) im Kreisbogenmittelpunkt anordenbar ist.

5. Winkelgeber nach einem der vorhergehenden Ansprüche,
**dadurch gekennzeichnet, dass** die elektrische Schaltungskompontente Teil eines Folienpotentiometers (5) ist

6. Gelenk, welches ein erstes (4) und ein zweites (3) Gelenkteil unter Ausbildung einer Schwenkachse (1) schwenkbar miteinander verbindet,
**gekennzeichnet durch** einen Winkelgeber nach einem der Ansprüche 1 bis 5, dessen Widerstandselement (6) relativ zu dem ersten Gelenkteil (4) und dessen Koppelelement (8) relativ zu dem zweiten Gelenkteil (3) ortsfest angeordnet sind, wobei die Schwenkachse (1) innerhalb der Ausnehmung (7) des Winkelgebers angeordnet ist.

7. Gelenk nach Anspruch 6,
**dadurch gekennzeichnet, dass** der Winkelgeber räumlich zwischen dem ersten und zweiten Gelenkteil (3, 4) angeordnet ist.

8. Kinematikvorrichtung für ein Cabriodach, umfassend
- ein Gelenk nach Anspruch 6 oder 7,
- einen Antrieb zum Betätigen des Gelenks, und
- eine Kontrolleinrichtung zum Erfassen eines Winkelsignals des Winkelgebers und zum Ansteuern des Antriebs in Abhängigkeit von dem Winkelssignal.

9. Verfahren zum Schwenken eines ersten und eines zweiten Gelenkteils (3, 4) relativ zueinander unter Verwendung eines Winkelgebers gemäß einem der Ansprüche 1 bis 5, dessen Widerstandselement (6) relativ zu dem ersten Gelenkteil (4) und dessen Koppelelement (8) relativ zu dem zweiten Gelenkteil (3) ortsfest angeordnet sind, wobei die Schwenkachse (1) innerhalb der Ausnehmung (7) des Winkelgebers angeordnet ist, umfassend den Schritt:
a) Verlagern des Koppelelements (8) zwischen der ersten und der zweiten Position durch Schwenken der Gelenkteile (3, 4) relativ zueinander.

10. Verfahren nach Anspruch 9 unter Verwendung eines Winkelgebers gemäß einem der Ansprüche 2 bis 5,
**gekennzeichnet durch** den weiteren Schritt:
b) Verlagern des Koppelelements (8) zwischen der zweiten und der dritten Position **durch** Schwenken der Gelenkteile (3, 4) relativ zueinander.

11. Verfahren nach Anspruch 9 oder 10,
**gekennzeichnet durch** den weiteren Schritt:
c) Beenden des Schwenkens, wenn ein Winkelsignal des Winkelgebers das Erreichen einer Endlage anzeigt.

12. Verfahren nach Anspruch 11,
**dadurch gekennzeichnet, dass** vor Schritt c) der weitere Schritt durchgeführt wird:
d) Verlangsamen des Schwenkens, wenn das Winkelsignal das Erreichen einer vorbestimmten Position vor der Endlage anzeigt.

13. Cabriodachgelenk, welches ein erstes und ein zweites Gelenkteil (3, 4) unter Ausbildung eine Schwenkachse (1) schwenkbar miteinander verbindet, mit einem Winkelgeber zum Erfassen eines relativen Schwenkwinkels zwischen dem ersten und zweiten Gelenkteil (3, 4), der eine elektrische Schaltungskomponente mit mindestens einem Widerstandselement (6), welches relativ zu dem ersten Gelenkteil (4) ortsfest so angeordnet ist, dass es die Schwenkachse (1) zumindest teilweise umgibt, und einem Koppelelement (8), welches relativ zu dem zweiten Gelenkteil (3) ortsfest angeordnet ist und im Zusammenwirken mit dem mindestens einen Widerstandselement (6) den Widerstandswert der elektrischen Schaltungskomponente beeinflusst, umfasst,
**dadurch gekennzeichnet, dass** die Schwenkachse (1) innerhalb einer radial offenen Ausnehmung (7) des Winkelgebers angeordnet ist.

14. Cabriodachgelenk nach Anspruch 13,
**dadurch gekennzeichnet, dass** die elektrische Schaltungskomponente Teil eines Folienpotentiometer (5) ist.
